# EUROPÄISCHE PATENTSCHRIFT

(11) **EP 1 301 012 B1**
(45) Veröffentlichungstag und Bekanntmachung des Hinweises auf die Patenterteilung: **31.08.2005**
(21) Anmeldenummer: 01123335.0
(22) Anmeldetag: 08.10.2001
(51) Int. Cl.: H04M 1/03, H04R 7/04

(54) **Mobiles Kommunikationsendgerät mit im Gerätegehäuse angeordnetem Flachlautsprecher und einem weiteren Schallwandler angeordnet zu einem Zwei-Wege-Systems mit dem Flachlautsprecher**
Mobile communication device with a flat speaker placed in the housing and an additional speaker being arranged in a two-way system with the flat speaker
Dispositif de communication électronique mobile avec haut-parleur plat arrangé dans le boîtier du dispositif et un haut-parleur additionnel arrangé dans un system de haut-parleur a deux voies avec le haut-parleur plat

(43) Veröffentlichungstag der Anmeldung: 09.04.2003
(73) Patentinhaber: SIEMENS AKTIENGESELLSCHAFT, 80333 München (DE)
(72) Erfinder: Aubauer, Roland, Dr., 46395 Bocholt (DE); Hülskemper, Michael, 46569 Hünxe (DE)

(56) Entgegenhaltungen:
- WO-A-00/69212
- WO-A-01/31971
- GB-A- 2 360 901
- US-A1- 2001 026 625

## Beschreibung

Die Erfindung bezieht sich auf ein mobiles Kommunikationsendgerät, das zum Aussenden von Sprachsignalen und zum Empfangen und Wiedergeben von Sprachsignalen ausgebildet ist und eine Sprachwiedergabeeinrichtung aufweist, wobei die Sprachwiedergabeeinrichtung einen Schallwandler aufweist.

Bei solchen mobilen Kommunikationsendgeräten erfolgt die Sprachwiedergabe bzw. Audiowiedergabe fast ausschließlich mit Hilfe sehr kleiner dynamischer Schallwandler, die unmittelbar hinter einer Frontblende des Kommunikationsendgerätes befestigt sind. Aufgrund der immer kleiner werdenden Abmessungen der Gehäuse vom Kommunikationsendgeräten und in Folge des Interesses an immer größeren Anzeigefeldern steht der Sprachwiedergabeeinrichtung als akustische Komponente des Kommunikationsendgerätes nur sehr begrenzter Raum an der Gerätevorderseite zur Verfügung. Daraus ergibt sich eine Miniaturisierung der Sprachwiedergabeeinrichtung, die einen sinkenden Wirkungsgrad und eine verschlechterte Klangqualität der eingesetzten Sprachwiedergabeeinrichtung nach sich zieht.

Außerdem sind im Stand der Technik mobile Kommunikationsendgeräte bekannt, die mit sog. Biegewellenlautsprechern ausgestattet sind. Bei einer bevorzugten Ausführungsform sind Anzeigeschutzfenster als Lautsprechermembran eingesetzt. Beispiele dafür sind in den Druckschriften WO 00/69212 A1, WO 01/31971 A2, US 2001/0026625 A1 und GB 2 360 901 A beschrieben. Diesen Ausführungsformen von mobilen Kommunikationsendgeräten ist es gemeinsam, dass der als Biegewellenlautsprecher ausgeführte Schallwandler einen Teil einer Außenfläche des Kommunikationsendgerätes einnimmt.

Ausgehend hiervon liegt der Erfindung die Aufgabe zugrunde, die Sprachqualität eines mobilen Kommunikationsendgerätes zu verbessern.

Diese Aufgabe wird bei dem eingangs genannten mobilen Kommunikationsendgerät dadurch gelöst, daß der Schallwandler innerhalb eines Gehäuses des mobilen Kommunikationsendgerätes angeordnet ist, und mindestens eine Schalldurchgangsöffnung in dem Gehäuse vorgesehen ist, die den von dem Schallwandler erzeugten Schall nach außerhalb des mobilen Kommunikationsendgerätes leitet und
der Schallwandler mit einem weiteren Schallwandler zur Ausbildung eines Zwei-Wege-Systems kombiniert ist.

Durch die gewählte Anordnung des Schallwandlers wird in vorteilhafter Weise der Tatsache Rechnung getragen, daß der nach dem Stand der Technik üblicher Weise an der Vorderseite eines mobilen Kommunikationsendgerätes von einer Sprachwiedergabeeinrichtung, beispielsweise einem Lautsprecher, eingenommener Raum für andere Komponenten zur Verfügung stehen kann, wie eine vergrößerte Anzeige. Der im Gehäuseinneren erzeugte Schall wird über die mindestens eine Schalldurchgangsöffnung nach außen geleitet, wobei beispielsweise über die Gehäusefrontseite verteilte Schalldurchgangsöffnungen vorgesehen sein können.

Bevorzugt ist der Schallwandler als Flachlautsprecher mit einer Membran und Betätigungsmitteln für die Membran ausgebildet. Der Einsatz eines Flachlautsprechers hat den Vorteil, daß er sich über große Flächen im Gehäuseinneren eines mobilen Kommunikationsendgerätes erstrecken kann, so daß eine große effektive Fläche für eine Schallabstrahlung zur Verfügung steht. Weitere Vorteile der Benutzung eines Flachlautsprechers ist es, daß er eine besonders geringe Bauhöhe aufweist, was aus Gründen der Platzersparnis wünschenswert ist, und die Auslenkungen der Membran das erforderliche Gesamtgehäusevolumen des mobilen Kommunikationsendgerätes nicht signifikant beeinflussen.

Der Schallwandler, beispielsweise der Flachlautsprecher oder ein dynamischer Schallwandler, ist bevorzugt an der Innenwand des Gehäuses angebracht. Im Falle eines Flachlautsprechers erstreckt sich beispielsweise seine Membran über im wesentlichen den gesamten Querschnitt des mobilen Kommunikationsendgerätes.

Alternativ kann der Schallwandler auch in eine Schaltkreisplatine des mobilen Kommunikationsendgerätes integriert sein. Im Falle einer Ausbildung des Schallwandlers als Flachlautsprecher kann beispielsweise der Bereich der Schaltkreisplatine hinter der Anzeige zur Anordnung des Flachlautsprechers eingesetzt werden. Auch eine Kombination des Flachlautsprechers mit einer Tastaturkontaktfläche des mobilen Kommunikationsendgerätes ist möglich.

Bei Ausführungsformen, bei denen der Schallwandler als Flachlautsprecher ausgebildet ist, wird die Membran z. B. von einer Kunststofffolie oder -platte gebildet, wobei die Betätigungsmittel für die Membran piezokeramische Aktuatoren oder auch dynamische Aktuatoren sein können, mit denen die Membran versehen ist. Die Membranabmessungen bei Flachlautsprechern übersteigen diejenige von bekannten dynamischen Schallwandlern um Größenordnungen, so daß sie für einen erhöhten Schalldruck günstig sind. Ein erhöhter Schalldruck ist insbesondere wünschenswert, wenn auch ein Freisprechbetrieb des mobilen Kommunikationsendgerätes benötigt wird. Durch die Anordnung des Flachlautsprechers im Inneren des Gehäuses und eine Abstrahlung des Schalls durch mehrere, verteilte Schalldurchgangsöffnungen wird gewährleistet, daß bei irrtümlicher Einschaltung des Freisprechbetriebs Beschädigungen des Gehörs vermieden werden, die bei den bekannten Kombinationen aus Schallwandlern mit großen Membranauslenkungen mit sehr kleinen Schallöffnungen auftreten können.

Der im Gehäuseinneren vorgesehene Schallwandler ist mit mindestens einem weiteren Schallwandler, beispielsweise einem Schallwandler, der in üblicher Weise hinter der Frontblende eines mobilen Kommunikationsendgerätes angeordnet ist, kombiniert. In diesem Fall wird die effektiv wirksame akustische Abstrahlfläche der Sprachwiedergabeeinrichtung des mobilen Kommunikationsendgerätes vergrößert, ohne daß das Gehäusevolumen ebenfalls vergrößert werden muß. Dies zieht einen deutlich verbesserten Klang der Sprachwiedergabeeinrichtung nach sich, insbesondere im Hinblick auf die Wiedergabe von Bässen.

Der Schallwandler ist mit dem weiteren Schallwandler auch zur Ausbildung eines Zwei-Wege-Systems kombiniert. Insbesondere kann der weitere Schallwandler als Anzeigelautsprecher ausgebildet sein, wobei die Anzeigeoberfläche bzw. das Anzeigeschutzfenster zur Schallabstrahlung genutzt wird. Solche Anzeigelautsprecher sind gut zur Wiedergabe eines Schallfrequenzbereichs oberhalb von 1 kHz geeignet. Daher ist es bevorzugt, daß der im Gehäuseinneren angeordnete Schallwandler zum Abstrahlen von Schall eine Frequenz von im wesentlichen weniger als 1 kHz und der weitere Schallwandler, beispielsweise der Anzeigelautsprecher, zum Abstrahlen von Schall einer Frequenz im wesentlichen größer als 1 kHz ausgebildet ist. Es ist hervorzuheben, daß der im Inneren des Gehäuses angeordnete Schallwandler beispielsweise ein Flachlautsprecher, wie oben erläutert, oder ein dynamischer Schallwandler sein kann. Das so realisierte Zwei-Wege-System ermöglicht eine qualitativ hochwertige Wiedergabe eines großen Frequenzbereichs für den Schall.

Ausführungsbeispiele der Erfindung werden nachfolgend anhand der Zeichnungen noch näher erläutert. In den Zeichnungen werden ähnliche Bauelemente mit denselben Bezugsziffern bezeichnet. Es zeigen:
Figur 1 einen Längsschnitt eines mobilen Kommunikationsgerätes mit im Gehäuseinneren angeordnetem Flachlautsprecher,
Figur 2 einen Längsschnitt eines mobilen Kommunikationsgerätes mit im Gehäuseinneren angeordneten dynamischen Schallwandlern, kombiniert mit einem Anzeigelautsprecher;
Figur 3 einen Längsschnitt eines mobilen Kommunikationsendgerätes mit im Gehäuseinneren angeordnetem und in eine Schaltkreisplatine integriertem Flachlautsprecher; und
Figur 4 einen Längsschnitt eines mobilen Kommunikationsendgerätes mit im Gehäuseinneren angeordnetem und einem Tastaturfeld zugeordnetem Flachlautsprecher.

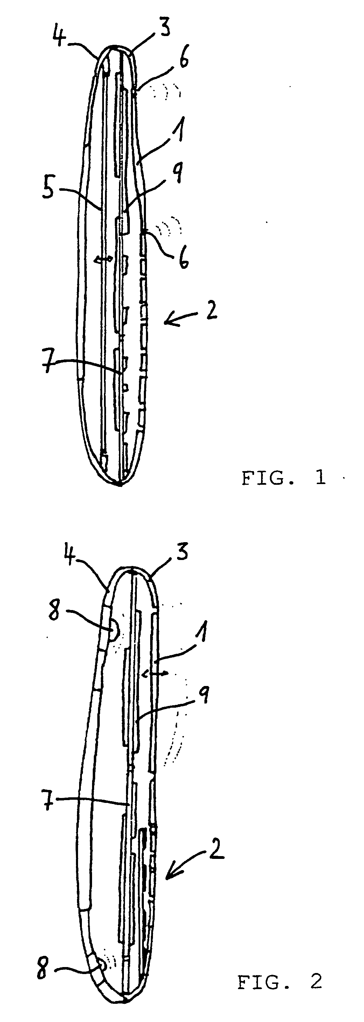

Wie aus Figur 1 hervorgeht, weist ein beispielhaftes Mobiltelefon eine Anzeigeabdeckung 1 zum Schutz eines darunterliegenden Anzeigefeldes 9 und ein Tastaturfeld 2 auf, und zwar an einer Oberschale 3 eines Gehäuses des Mobiltelefons.

Eine Unterschale 4 des Mobiltelefons, die zusammen mit der Oberschale 3 das Gehäuse des Mobiltelefons bildet, ist mit einem Schallwandler in Form eines Flachlautsprechers 5 ausgestattet, der von dem Mobiltelefon empfangene Sprachsignale wiedergibt. Der Flachlautsprecher 5 ist über piezokeramische oder dynamische Aktuatoren an der Unterschale 4 angebracht und erstreckt sich im wesentlichen über die gesamte Länge des Mobiltelefons. Der Flachlautsprecher 5 ist aus einer Kunststoffolie gebildet.

Der Flachlautsprecher 5 ist von der Anzeigeabdeckung 1 aus gesehen hinter einer Schaltkreisplatine 7 des Mobiltelefons angeordnet. Da die Schaltkreisplatine 7 üblicher Weise einen erheblichen Teil des Längsschnitts des Mobiltelefons frei läßt, kann der von dem Flachlautsprecher 5 erzeugte Schall an der Schaltkreisplatine vorbei gelangen.

Zum Austritt des Schalls weist die Oberschale 3 des Mobiltelefons eine Anzahl Durchgangsöffnungen 6 auf, die um das Anzeigefeld 1 herum angeordnet sein können.

Der Flachlautsprecher 5 kann einen großen Teil der Gehäusehöhe/breite nutzen und damit eine besonders große Abstrahlfläche für Schallwellen aufweisen oder im Bereich von Randaufhängungen der Schaltkreisplatine 7 an der Innenseite des Gehäuses des Mobiltelefons gelangt der abgestrahlte Schall zu den Durchgangsöffnungen 6.

Die Figur 2 zeigt eine alternative Ausführungsform der Erfindung, bei der die Anzeigeabdeckung 1 als Anzeigelautsprecher (Displaylautsprecher) ausgebildet ist. Die Unterschale 4 ist bei dieser Ausführungsform mit zwei dynamischen Schallwandlern 8 ausgestattet, die unmittelbar an der Unterschale 4, und zwar an ihrer Innenseite, angebracht sind. Die dynamischen Schallwandler 8 sind besonders zur Wiedergabe tiefer Frequenzen, beispielsweise im Bereich unter 1 kHz geeignet. Es wird hervorgehoben, daß alternativ zueinander entweder wenige große oder vergleichsweise viele kleine dynamische Schallwandler im Gehäuseinneren vorgesehen sein können.

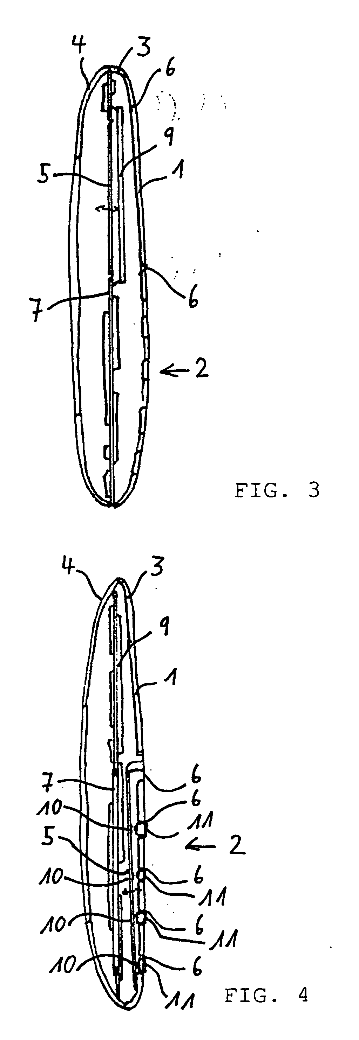

Der von den dynamischen Schallwandlern 8 ausgestrahlte Schall gelangt zu Durchgangsöffnungen 6 in der Oberschale 3 des Mobiltelefons. Die Durchgangsöffnungen 6 sind auch bei der Ausführungsform nach Figur 4 um die Anzeigeabdeckung 1 herum angeordnet, die bei dieser Ausführungsform als Anzeigelautsprecher ausgebildet ist. Die Anzeigeabdeckung 1 wird zur Wiedergabe des Frequenzbereichs oberhalb von 1 kHz genutzt, so daß sich eine Schallausstrahlung über zwei Wege ergibt, von denen die dynamischen Schallwandler an der Unterschale 4 den tiefen Frequenzbereich und das Anzeigefeld 1 als Anzeigelautsprecher den hohen Frequenzbereich bedient.

Der von den dynamischen Schallwandlern 8 ausgestrahlte Schall kann durch Aussparungen in der Schaltkreisplatine 7 oder im Bereich von Randaufhängungen der Schaltkreisplatine 7 andeckenden Seite des Gehäuses des Mobiltelefons in Richtung der Durchgangsöffnungen 6 gelangen.

Hinsichtlich der anhand der Figur 2 veranschaulichten Ausführungsform eines mit mehreren Schallwandlern ausgestatteten Mobiltelefons ist hervorzuheben, daß die in Figur 2 dargestellten dynamischen Schallwandler 8 ohne weiteres durch einen Flachlautsprecher aus einer Kunststoffolie oder -platte ersetzt werden können, wie er im Zusammenhang mit der Figur 1 oben erläutert wurde.

Aus der Figur 3 geht eine alternative Ausführungsform für eine Anordnung des Flachlautsprechers 5 im Inneren des Gehäuses des Mobiltelefons hervor. Dabei ist der Flachlautsprecher 5 in die Schaltkreisplatine 7 des Mobiltelefons integriert, und zwar im vorliegenden Ausführungsbeispiel hinter dem Anzeigefeld 9. Das Anzeigefeld 9 ist über Kontakte von der Schaltkreisplatine 7 abgehoben und bietet somit dem Flachlautsprecher 5 die Möglichkeit der Ankopplung an das Luftvolumen in der Oberschale 3 des Gehäuses des Mobiltelefons und damit zu den Durchgangsöffnungen 6 an der Vorderseite des Gehäuses.

Eine weitere Ausführungsform zur Anordnung des Flachlautsprechers 5 im Inneren des Gehäuses eines Mobiltelefons geht aus der Figur 4 hervor. Die dargestellte Ausführungsform bezieht sich auf ein Mobiltelefon, bei dem die Tastatureinheiten auf einer gesonderten Tastaturplatine untergebracht sind. Der Flachlautsprecher 5 bildet diese Tastaturplatine, wobei auf der Oberseite des Flachlautsprechers 5 Kontakte 10 aufgebracht sind, welche durch davor angeordnete Drucktasten 11 aktiviert werden können. Bei der Ausführungsform nach Figur 4 ist zu beachten, daß die Schallamplituden des Flachlautsprechers 5 klein gegenüber dem Betätigungsweg für einen Kontakt zu wählen sind.

Es ist hervorzuheben, daß bei den Ausführungsformen eines Mobiltelefons nach den Figuren 3 und 4 auch eine Kombination mit der als Anzeigelautsprecher ausgebildeten Anzeigeabdeckung 1 nach Figur 2 möglich ist. Bei solchen Modifikationen würde der Flachlautsprecher 5 jeweils wiederum den Anzeigelautsprecher im tieffrequenten Bereich unterstützen.

## Patentansprüche

1. Mobiles Kommunikationsendgerät, das zum Aussenden von Sprachsignalen und zum Empfangen und Wiedergeben von Sprachsignalen ausgebildet ist und eine Sprachwiedergabeeinrichtung aufweist, wobei die Sprachwiedergabeeinrichtung einen Schallwandler (5; 8) aufweist,
**dadurch gekennzeichnet, dass**
der Schallwandler (5; 8) innerhalb eines Gehäuses des mobilen Kommunikationsendgerätes angeordnet ist, und mindestens eine Schalldurchgangsöffnung (6) in dem Gehäuse vorgesehen ist, die den von dem Schallwandler (5; 8) erzeugten Schall nach außerhalb des mobilen Kommunikationsendgerätes leitet und der Schallwandler (5; 8) mit einem weiteren Schallwandler (1) zur Ausbildung eines Zwei-Wege-Systems kombiniert ist.

2. Kommunikationsendgerät nach Anspruch 1,
**dadurch gekennzeichnet,**
**daß** der weitere Schallwandler (1) als Anzeigelautsprecher ausgebildet ist.

3. Kommunikationsendgerät nach einem der Ansprüche 1 oder 2,
**dadurch gekennzeichnet,**
**daß** der Schallwandler (5; 8) im Inneren des Gehäuses zum Abstrahlen von Schall einer Frequenz im wesentlichen von weniger als 1 kHz und der weitere Schallwandler (1) zum Abstrahlen von Schall einer Frequenz im wesentlichen größer als 1 kHz ausgebildet ist.

4. Kommunikationsendgerät nach einem der Ansprüche 1 bis 3,
**dadurch gekennzeichnet,**
**daß** der Schallwandler (5; 8) an der Innenwand des Gehäuses angebracht ist.

5. Kommunikationsendgerät nach Anspruch 4,
**dadurch gekennzeichnet,**
**daß** der Schallwandler (5; 8) in eine Schaltkreisplatine (7) des mobilen Kommunikationsendgerätes integriert ist.

6. Kommunikationsendgerät nach einem der Anspruch 1 bis 5,
**dadurch gekennzeichnet,**
**daß** der Schallwandler (5; 8) als Flachlautsprecher mit einer Membran und Betätigungsmitteln für die Membran ausgebildet ist.

7. Kommunikationsendgerät nach einem der Ansprüche 4 bis 6,
**dadurch gekennzeichnet,**
**daß** die Membran von einer Kunststoffolie gebildet wird.

8. Kommunikationsendgerät nach einem der Ansprüche 4 bis 7,
**dadurch gekennzeichnet,**
**daß** die Betätigungsmittel piezokeramische Aktuatoren aufweisen, mit denen die Membran versehen ist.

9. Kommunikationsendgerät nach einem der Ansprüche 4 bis 8,
**dadurch gekennzeichnet,**
**daß** die Betätigungseinrichtung dynamische Aktuatoren aufweist, mit denen die Membran versehen ist.

10. Kommunikationsendgerät nach einem der Ansprüche 1 bis 9,
**dadurch gekennzeichnet,**
**daß** das Kommunikationsendgerät eine Tastaturplatine aufweist, die als Flachlautsprecher ausgebildet ist.

## Claims

1. Mobile communications terminal, which is designed to transmit speech signals and to receive and reproduce speech signals, and which has a speech-reproduction device, the speech-reproduction device having a sound transducer (5; 8),
**characterized in that**
the sound transducer (5; 8) is disposed inside a housing of the mobile communications terminal, and at least one sound transmission opening (6) is provided in the housing to forward the sound produced by the sound transducer (5; 8) to the outside of the mobile communications terminal, and the sound transducer (5; 8) is combined with a further sound transducer (1) to form a two-way system.

2. Communications terminal according to Claim 1,
**characterized in that**
the further sound transducer (1) is designed as a display loudspeaker.

3. Communications terminal according to one of Claims 1 or 2,
**characterized in that**
the sound transducer (5; 8) inside the housing is designed to radiate sound at a frequency essentially lower than 1 kHz, and the further sound transducer (1) is designed to radiate sound at a frequency essentially higher than 1 kHz.

4. Communications terminal according to one of Claims 1 to 3,
**characterized in that**
the sound transducer (5; 8) is fitted to the inside wall of the housing.

5. Communications terminal according to Claim 4,
**characterized in that**
the sound transducer (5; 8) is integrated into a circuit board (7) of the mobile communications terminal.

6. Communications terminal according to one of Claims 1 to 5,
**characterized in that**
the sound transducer (5; 8) is designed as a flat loudspeaker with a diaphragm and actuation means for the diaphragm.

7. Communications terminal according to one of Claims 4 to 6,
**characterized in that**
the diaphragm is formed from a plastic film.

8. Communications terminal according to one of Claims 4 to 7,
**characterized in that**
the actuation means have piezo-ceramic actuators with which the diaphragm is provided.

9. Communications terminal according to one of Claims 4 to 8,
**characterized in that**
the actuation device has dynamic actuators with which the diaphragm is provided.

10. Communications terminal according to one of Claims 1 to 9,
**characterized in that**
the communications terminal has a keypad circuit board, which is designed as a flat loudspeaker.

## Revendications

1. Terminal mobile de communication conçu pour émettre des signaux vocaux ainsi que pour recevoir et restituer des signaux vocaux et équipé d'une installation de restitution de signaux vocaux, l'installation de restitution de signaux vocaux étant munie d'un transducteur acoustique (5 ; 8),
**caractérisé en ce que** le transducteur acoustique (5 ; 8) est placé à l'intérieur d'un boîtier du terminal de communication, le boîtier comporte au moins une ouverture de passage des sons (6) qui conduit le son produit par le transducteur acoustique (5 ; 8) à l'extérieur du terminal mobile de communication et le transducteur acoustique (5 ; 8) est combiné à un autre transducteur acoustique (1) pour former un système à deux voies.

2. Terminal de communication selon la revendication 1,
**caractérisé en ce que**
l'autre transducteur acoustique (1) est un haut-parleur à affichage.

3. Terminal de communication selon l'une des revendications 1 ou 2, **caractérisé en ce que**
le transducteur acoustique (5 ; 8) à l'intérieur du boîtier est conçu pour émettre surtout des sons dont la fréquence est inférieure à 1 kHz et l'autre transducteur acoustique (1) pour émettre surtout des sons dont la fréquence est supérieure à 1 kHz.

4. Terminal de communication selon l'une des revendications 1 à 3, **caractérisé en ce que** le transducteur acoustique (5 ; 8) est appliqué à la paroi intérieure du boîtier.

5. Terminal de communication selon la revendication 4, **caractérisé en ce que** le transducteur acoustique (5 ; 8) est intégré dans une plaque de circuit (7) du terminal mobile de communication.

6. Terminal de communication selon l'une des revendications 1 à 5, **caractérisé en ce que** le transducteur acoustique (5 ; 8) est conçu comme haut-parleur plat comportant une membrane et des moyens de commande pour la membrane.

7. Terminal de communication selon l'une des revendications 4 à 6, **caractérisé en ce que** la membrane est formée par une feuille en matière plastique.

8. Terminal de communication selon l'une des revendications 4 à 7, **caractérisé en ce que** les moyens de commande comportent des actionneurs piézoélectriques situés sur la membrane.

9. Terminal de communication selon l'une des revendications 4 à 8, **caractérisé en ce que** l'installation de commande comporte des actionneurs dynamiques situés sur la membrane.

10. Terminal de communication selon l'une des revendications 1 à 9, **caractérisé en ce que** le terminal de communication comporte une plaque de clavier sous forme d'un haut-parleur plat.
